# EUROPEAN PATENT APPLICATION

(11) **EP 4 163 152 A1**
(43) Date of publication of application: **12.04.2023**
(21) Application number: 22200052.3
(22) Date of filing: 06.10.2022
(51) Int. Cl.: B60P 1/02, B62D 53/06

(54) **REAR AXLE MOVEMENT DEVICE FOR TRUCK WITH LOWERABLE BED**

(30) Priority: 06.10.2021 TW 110137442
(71) Applicant: Valsch Dynamic Mechatronics Ltd., Taoyuan City 33743 (TW)
(72) Inventor: Yang, An-Tao Anthony, Taoyuan City (TW)
(74) Representative: Sach, Greg Robert

(57) **Abstract**

Provided is a rear axle movement device for a truck with a lowerable bed, comprising: a front axle, a driver's cab, a rear axle, a cargo container, a sub-frame, a first lifting device, a second lifting device, a first guiding device, a second guiding device, and an electric motor. According to the present invention, the rear axle movement device utilizes a chain and a sprocket.

## Description

### Field of Invention

The present invention provides a rear axle movement device for truck with lowerable bed, in particular a truck having a driver's cab and a cargo container as two independent compartments utilizes chain and sprocket to control the movement of the rear axle.

### Background

Currently used truck with lowerable bed has a driver's cab, a cargo container, a front axle, a rear axle, two lifting devices and two guiding devices, in which the front axle connects to the driver's cab; the driver's cab connects to the second lifting device and the second guiding device; the second lifting device connects to the cargo container; the cargo container connects to the first lifting device and the first guiding device; and the first guiding device connects to the rear axle. In driving mode, the front axle is under the driver's cab and the rear axle is under the cargo container. In loading mode, the front axle is under the driver's cab and the rear axle is under the driver's cab.

The rear axle movement of the truck with lowerable bed as mentioned above utilizes an electric motor to drive a gear to move the gear (i) on the second half of the first gear rack connecting to the first guiding device or (ii) on the first half of the first gear rack connecting to the second guiding device, causing the rear axle can be moved between the first guiding device and the second guiding device. However, due to the accuracy of control for height, the first half of the first gear rack and the second half of the first gear rack have an offset, causing the change of assemble distance for the gear and the gear rack.

### Problem to be solved

The primary objective of the present invention is to provide a rear axle movement device for truck with lowerable bed, in which the rear axle movement device utilizes a chain and a sprocket to move the rear axle between the position below the driver's cab and the position below the cargo container.

### Summary of Invention

Provided in the first embodiment is a rear axle movement for truck with lowerable bed comprising: a front axle, a driver's cab, a rear axle, a cargo container, a sub-frame, a first lifting device, a second lifting device, a first guiding device, a second guiding device, a first fixed end of the first chain, a first movable end of the first chain, a first chain, a first sprocket, a first idler, a second idler, a third idler, an electric motor, and a clutch.

Provided in the second embodiment is a rear axle movement for truck with lowerable bed comprising: a front axle, a driver's cab, a rear axle, a cargo container, a sub-frame, a first lifting device, a second lifting device, a first guiding device, a second guiding device, a first fixed end of the first chain, a first moveable end of the first chain, a first chain, a first sprocket, a first idler, a second idler, a third idler, a fourth idler, a fifth idler, a sixth idler, an electric motor, and a clutch.

Provided in the third embodiment is a rear axle movement for truck with lowerable bed comprising: a front axle, a driver's cab, a rear axle, a cargo container, a sub-frame, a first lifting device, a second lifting device, a first guiding device, a second guiding device, a first fixed end of the first chain, a first moveable end of the first chain, a first chain, a first sprocket, a first idler, a second idler, a third idler, a fourth idler, a fifth idler, an electric motor, and a clutch.

Provided in the fourth embodiment is a rear axle movement for truck with lowerable bed comprising: a front axle, a driver's cab, a rear axle, a cargo container, a sub-frame, a first lifting device, a second lifting device, a first guiding device, a second guiding device, a first fixed end of the first chain, a second fixed end of the first chain, a first chain, a first sprocket, a first idler, a second idler, a third idler, a fourth idler, a fifth idler, a sixth idler, an electric motor, and a clutch.

Provided in the fifth embodiment is a rear axle movement for truck with lowerable bed comprising: a front axle, a driver's cab, a rear axle, a cargo container, a sub-frame, a first lifting device, a second lifting device, a first guiding device, a second guiding device, a first fixed end of the first chain, a second fixed end of the first chain, a first chain, a first sprocket, a first idler, a second idler, a third idler, a fourth idler, a fifth idler, an electric motor, and a clutch.

### Advantage of Invention

According to the present invention, a rear axle movement device is enabled with the use of a chain and a sprocket to move the rear axle between the position below the driver's cab and the position below the cargo container.

### Description of Drawings

FIG.1 is a side view of a truck with lowerable bed in driving mode
FIG.2 is a side view of a truck with lowerable bed during mode change.
FIG.3 is a side view of a truck with lowerable bed in a loading mode.
FIG.4 to FIG.6 are schematic views of the first embodiment.
FIG.7 to FIG.9 are schematic views of the second embodiment.
FIG. 10 to FIG. 12 are schematic views of the third embodiment.
FIG. 13 to FIG. 15 are schematic views of the fourth embodiment.
FIG. 16 to FIG. 18 are schematic views of the fifth embodiment.

### Description

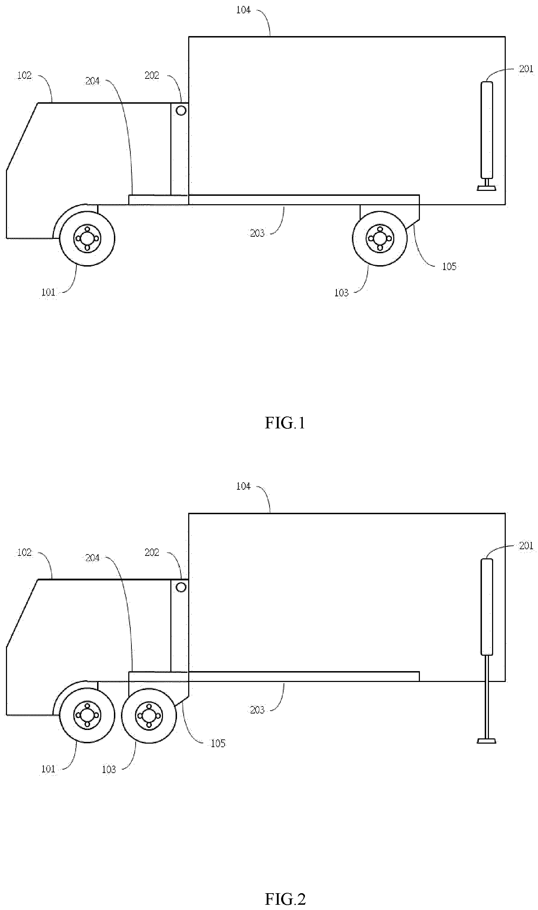

Referring to FIG.1, a truck with lowerable bed to the first embodiment, the second embodiment, the third embodiment, the fourth embodiment, and the fifth embodiment of the present invention includes: a front axle 101, a driver's cab 102, a rear axle 103, a cargo container 104, a sub-frame 105, a first lifting device 201, a second lifting device 202, a first guiding device 203 and a second guiding device 204.

Referring to FIG.1, the front axle 101 connects to the driver's cab 102; the driver's cab 102 connects to the second lifting device 202 and the second guiding device 204; the second lifting device 202 connects to the cargo container 104; the cargo container 104 connects to the first lifting device 201 and the first guiding device 203; the first guiding device 203 connects to the sub-frame 105; and the sub-frame 105 connects to the rear axle 103.

Referring to FIG.1, the front axle 101 is below the driver's cab 102; the rear axle 103 is below the cargo container 104; and the driver's cab 102 is before the cargo container 104.

Referring to FIG.1 and FIG.2, when the truck is changed from driving mode to transition mode, the first lifting device 201 extend to maintain the rear height of the cargo container 104; the sub-frame 105 is moved from the first guiding device 203 to the second guiding device 204; and the rear axle 103 is moved from the position below the cargo container 104 to the position below the driver's cab 102.

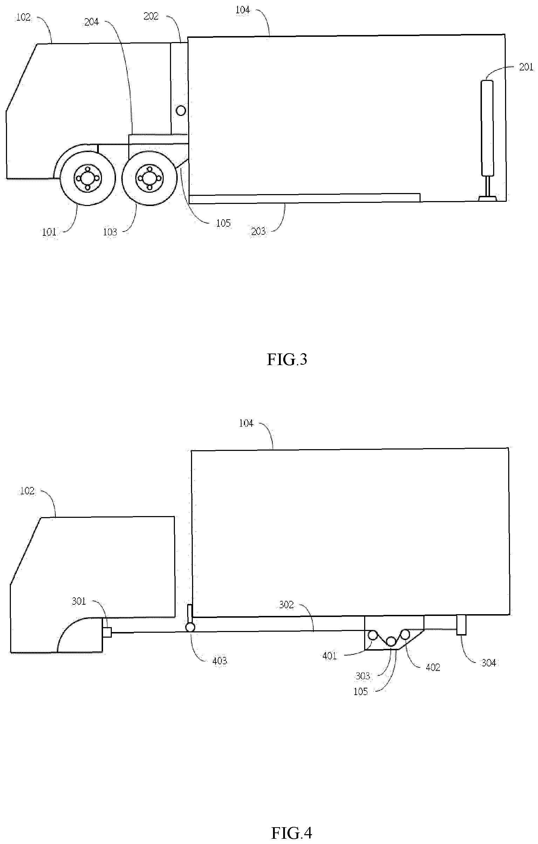

Referring to FIG.2 and FIG.3, when the truck is changed from transition mode to loading mode, the first lifting device 201 controls the rear height of the cargo container 104 and the second lifting device 202 controls the front height of the cargo container 104 to allow the cargo container 104 to be moved downward from the first height to the second height.

Referring to FIG.3 and FIG.2, when the truck is changed from the loading mode to transition mode, the first lifting device 201 controls the rear height of the cargo container 104 and the second lifting device 202 controls the front height of the cargo container 104 to allow the cargo container 104 to be moved upward from the second height to the first height.

Referring to FIG.2 and FIG. 1, when the truck is changed from transition mode to driving mode, the sub-frame 105 is moved from the second guiding device 204 to the first guiding device 203; the rear axle 103 is moved from the position below the driver's cab 102 to the position below the cargo container 104; and the first lifting device 201 contract.

Referring to FIG.4, the rear axle movement to the first embodiment of the present invention includes an electric motor, a clutch, a first fixed end of the first chain 301, a first chain 302, a first sprocket 303, a first movable end of the first chain 304, a first idler 401, a second idler 402, and a third idler 403.

Referring to FIG.4, the driver's cab 102 connects to the first fixed end of the first chain 301; the first fixed end of the first chain 301 connects to the first chian302; the first chain 302 connects to the first sprocket 303 through the first idler 401, and connects to the first movable end of the first chain 304 through the second idler 402; and the first movable end of the first chain 304 connects to the cargo container 104; wherein the chain 302 is meshing with the first sprocket 303; the first sprocket 303 connects to the clutch; the clutch connects to the electric motor; and the electric motor connects to the sub-frame 105.

Referring to FIG.4, the first fixed end of the first chain 301 is before the third idler 403; the third idler 403 is before the first idler 401; the first idler 401 is before the first sprocket 303; the first sprocket 303 is before the second idler 402; and the second idler 402 is before the first movable end of the first chain 304.

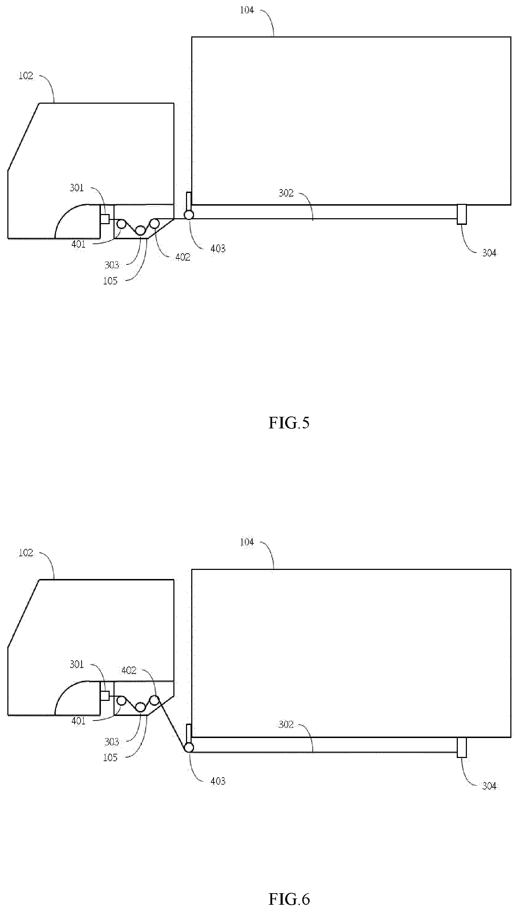

Referring to FIG.4 and FIG.5, when the truck is changed from driving mode to transition mode, the clutch connects to the electric motor and the first sprocket 303; and the electric motor drives the first sprocket 303 to move the sub-frame 105 from the first guiding device 203 to the second guiding device 204.

Referring to FIG.5, the first fixed end of the first chain 301 is before the first idler 401; the first idler 401 is before the first sprocket 303; the first sprocket 303 is before the second idler 402; the second idler 402 is before the third idler 403; and the third idler 403 is before the first movable end of the first chain 304.

Referring to FIG.5 and FIG.6, when the truck is changed from transition mode to loading mode, the third idler 403 connects to the first chain 302; and the first movable end of the first chain 304 unwinds the first chain 302.

Referring to FIG.6, the first fixed end of the first chain 301 is before the first idler 401; the first idler 401 is before the first sprocket 303; the first sprocket 303 is before the second idler 402; the second idler 402 is before the third idler 403; and the third idler 403 is before the first movable end of the first chain 304.

Referring to FIG.6 and Fig.5, when the truck is changed from loading mode to transition mode, the third idler 403 disconnects to the first chain 302; and the first movable end of the first chain 304 winds the first chain 302.

Referring to FIG.5, the first fixed end of the first chain 301 is before the first idler 401; the first idler 401 is before the first sprocket 303; the first sprocket 303 is before the second idler 402; the second idler 402 is before the third idler 403; and the third idler 403 is before the first movable end of the first chain 304.

Referring to FIG.5 and FIG.4, when the truck is changed from transition mode to driving mode, the electric motor drives the first sprocket 303; the sub-frame 105 is moved from the second guiding device 204 to the first guiding device 203; and the clutch disconnects to the electric motor and the first sprocket 303.

Referring to FIG.4, the first fixed end of the first chain 301 is before the third idler 403; the third idler 403 is before the first idler 401; the first idler 401 is before the first sprocket 303; the first sprocket 303 is before the second idler 402; and the second idler 402 is before the first movable end of the chain 304.

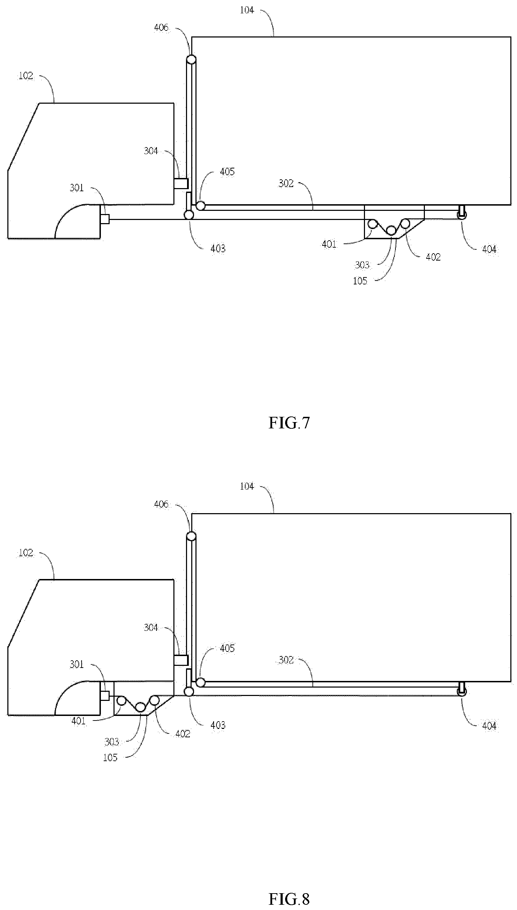

Referring to FIG.7, the rear axle movement to the second embodiment of the present invention includes an electric motor, a clutch, a first fixed end of the first chain 301, a first chain 302, a first sprocket 303, a first movable end of the first chain 304, a first idler 401, a second idler 402, a third idler 403, a fourth idler 404, a fifth idler 405, and a sixth idler 406.

Referring to FIG.7, the driver's cab 102 connects to the first fixed end of the first chain 301; the first fixed end of the first chain 301 connects to the first chian302; the first chain 302 connects to the first sprocket 303 through the first idler 401, and connects to the first movable end of the first chain 304 through the second idler 402, the fourth idler 404, the fifth idler 405, and sixth idler 406; and the first movable end of the first chain 304 connects to the driver's cab 102; wherein the first idler 401 connects to the sub-frame 105; the second idler 402 connects to the sub-frame 105; the third idler 403 connects to the cargo container 104;the fourth idler 404 connects to the cargo container 104; the fifth idler 405connects to the cargo container 104; the sixth idler 406 connects to the cargo container 104; wherein the first chain 302 is meshing with the first sprocket 303; the first sprocket 303 connects to the clutch, the clutch connects to the electric motor; and the electric motor connects to the sub-frame 105.

Referring to FIG.7, the first fixed end of the first chain 301 is before the third idler 403; the third idler 403 is before the first idler 401; the first idler 401 is before the first sprocket 303; the first sprocket 303 is before the second idler 402; the second idler 402 is before the fourth idler 404; the fourth idler 404 is after the fifth idler 405; the fifth idler 405 is below the sixth idler 406; and the sixth idler 406 is above the first movable end of the first chain 304.

Referring to FIG.7 and FIG.8, when the truck is changed from driving mode to transition mode, the clutch connects to the electric motor and the first sprocket 303; the electric motor drives the first sprocket 303; and the sub-frame 105 is moved from the first guiding device 203 to the second guiding device 204.

Referring to FIG.8, the first fixed end of the first chain 301 is before the first idler 401; the first idler 401 is before the first sprocket 303; the first sprocket 303 is before the second idler 402; the second idler 402 is before the third idler 403; the third idler 403 is before the fourth idler 404; the fourth idler 404 is after the fifth idler 405; the fifth idler 405 is below the sixth idler 406; and the sixth idler 406 is above the first movable end of the first chain 304.

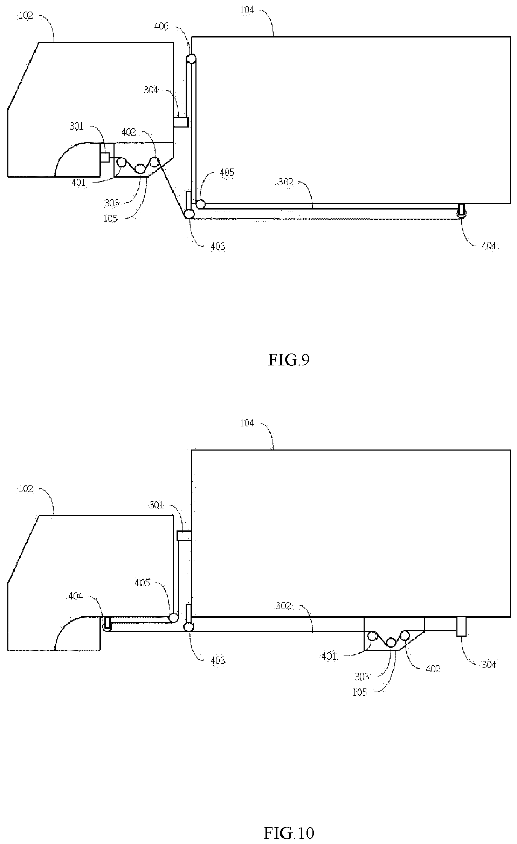

Referring to FIG.8 and FIG.9, when the truck is changed from transition mode to loading mode, the third idler 403 connects to the first chain 302; and the first movable end of the first chain 304 unwinds the first chain 302.

Referring to FIG.9, the first fixed end of the first chain 301 is before the first idler 401; the first idler 401 is before the first sprocket 303; the first sprocket 303 is before the second idler 402; the second idler 402 is before the third idler 403; the third idler 403 is before the fourth idler 404; the fourth idler 404 is after the fifth idler 405; the fifth idler 405 is below the sixth idler 406; and the sixth idler 406 is above the first movable end of the first chain 304.

Referring to FIG.9 and FIG.8, when the truck is changed from loading mode to transition mode, the third idler 403 disconnects to the first chain 302; and the first movable end of the first chain 304 winds the first chain 302.

Referring to FIG.8, the first fixed end of the first chain 301 is before the first idler 401; the first idler 401 is before the first sprocket 303; the first sprocket 303 is before the second idler 402; the second idler 402 is before the third idler 403; the third idler 403 is before the fourth idler 404; the fourth idler 404 is after the fifth idler 405; the fifth idler 405 is below the sixth idler 406; and the sixth idler 406 is above the first movable end of the first chain 304.

Referring FIG.8 and FIG.7, when the truck is changed from transition mode to driving mode, the electric motor drives the first sprocket 303; the sub-frame 105 is moved from the second guiding device 204 to the first guiding device 203; and the clutch disconnect to the electric motor and the first sprocket 303.

Referring to FIG.7, the first fixed end of the first chain 301 is before the third idler 403; the third idler 403 is before the first idler 401; the first idler 401 is before the first sprocket 303; the first sprocket 303 is before the second idler 402; the second idler 402 is before the fourth idler 404; the fourth idler 404 is after the fifth idler 405; the fifth idler 405 is below the sixth idler 406; and the sixth idler 406 is above the first movable end of the chain 304.

Referring to FIG. 10, the rear axle movement to the third embodiment of the present invention includes an electric motor, a clutch, a first fixed end of the first chain 301, a first chain 302, a first sprocket 303, a first movable end of the first chain 304, a first idler 401, a second idler 402, a third idler 403, a fourth idler 404, and a fifth idler 405.

Referring to FIG. 10, the cargo container 104 connects to the first fixed end of the first chain 301; the first fixed end of the first chain 301 connects to the first chian302; the first chain 302 connects to the first sprocket 303 through the fifth idler 405, the fourth idler 404 and the first idler 401 and connects to the first movable end of the first chain 304 through the second idler 402; and the first movable end of the first chain 304 connects to the cargo container 104; wherein the first idler 401 connects to the sub-frame 105; the second idler 402 connects to the sub-frame 105; the third idler 403 connects to the cargo container 104; the fourth idler 404 connects to the driver's cab 102; the fifth idler 405 connects to the driver's cab 102; wherein the first chain 302 is meshing with the first sprocket 303; the first sprocket 303 connects to the clutch, the clutch connects to the electric motor; and the electric motor connects to the sub-frame 105.

Referring to FIG. 10, the first fixed end of the first chain 301 is above the fifth idler 405; the fifth idler 405 is after the fourth idler 404; the fourth idler 404 is before the third idler 403; the third idler 403 is before the first idler 401; the first idler 401 is before the first sprocket 303; the first sprocket 303 is before the second idler 402; the second idler 402 is before the first movable end of the first chain 304.

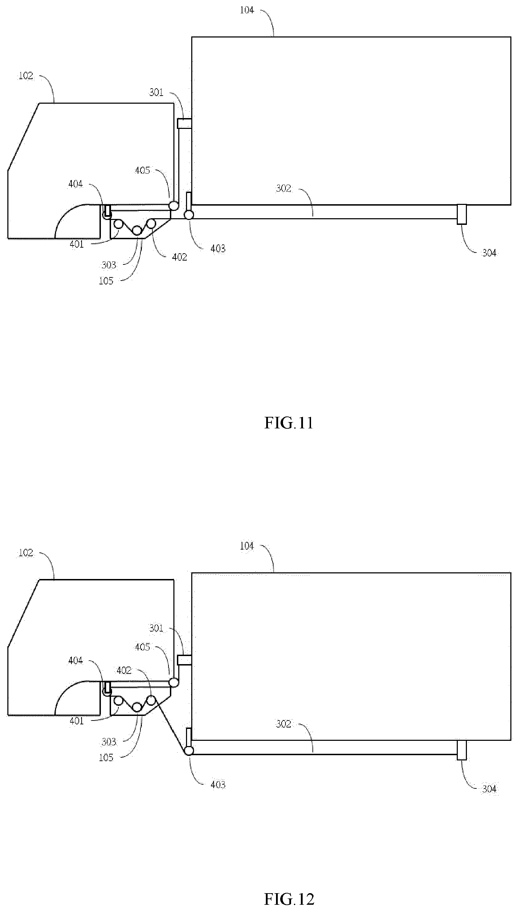

Referring to FIG. 10 and FIG. 11, when the truck is changed from driving mode to transition mode, the clutch connects to the electric motor and the first sprocket 303; the electric motor drives the first sprocket 303; and the sub-frame 105 is moved from the first guiding device 203 to the second guiding device 204.

Referring to FIG. 11, the first fixed end of the first chain 301 is above the fifth idler 405; the fifth idler 405 is after the fourth idler 404; the fourth idler 404 is before the first idler 401; the first idler 401 is before the first sprocket 303; the first sprocket 303 is before the second idler 402; the second idler 402 is before the third idler 403; and the third idler 403 is before the first movable end of the first chain 304.

Referring to FIG.11 and FIG.12, when the truck is changed from transition mode to loading mode, the third idler 403 connects to the first chain 302; and the first movable end of the first chain 304 unwinds the first chain 302.

Referring to FIG.12, the first fixed end of the first chain 301 is above the fifth idler 405; the fifth idler 405 is after the fourth idler 404; the fourth idler 404 is before the first idler 401; the first idler 401 is before the first sprocket 303; the first sprocket 303 is before the second idler 402; the second idler 402 is before the third idler 403; and the third idler 403 is before the first movable end of the first chain 304.

Referring to FIG.12 and FIG.11, when the truck is changed from loading mode to transition mode, the third idler 403 disconnects to the first chain 302; and the first movable end of the first chain 304 winds the first chain 302.

Referring to FIG. 11, the first fixed end of the first chain 301 is above the fifth idler 405; the fifth idler 405 is after the fourth idler 404; the fourth idler 404 is before the first idler 401; the first idler 401 is before the first sprocket 303; the first sprocket 303 is before the second idler 402; the second idler 402 is before the third idler 403; and the third idler 403 is before the first movable end of the first chain 304.

Referring to FIG.11 and FIG.10, when the truck is changed from transition mode to driving mode, the electric motor drives the first sprocket 303; the sub-frame 105 is moved from the second guiding device 204 to the first guiding device 203; and the clutch disconnects to the electric motor and the first sprocket 303.

Referring to FIG.10, the first fixed end of the first chain 301 is above the fifth idler 405; the fifth idler 405 is after the fourth idler 404; the fourth idler 404 is before the third idler 403; the third idler 403 is before the first idler 401; the first idler 401 is before the first sprocket 303; the first sprocket 303 is before the second idler 402; the second idler 402 is before the first movable end of the first chain 304.

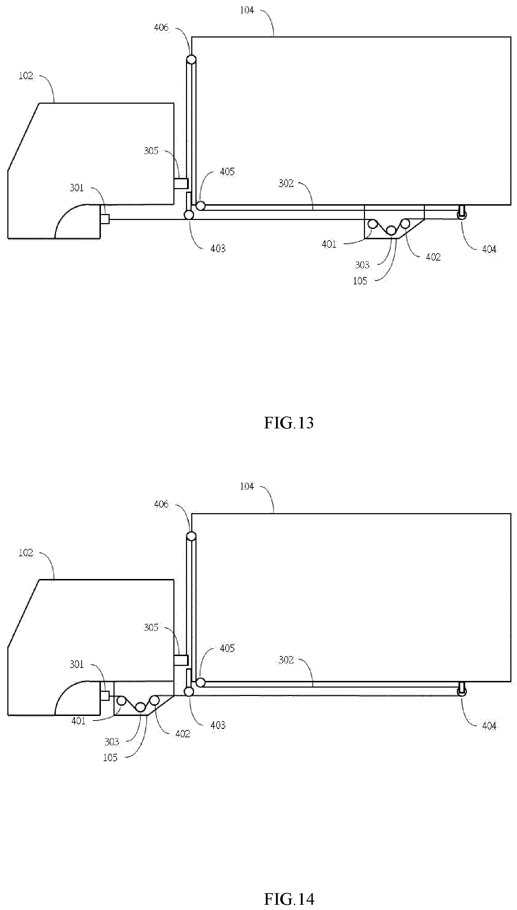

Referring to FIG. 13, the rear axle movement to the fourth embodiment of the present invention includes an electric motor, a clutch, a first fixed end of the first chain 301, a first chain 302, a first sprocket 303, a second fixed end of the first chain 305, a first idler 401, a second idler 402, a third idler 403, a fourth idler 404, a fifth idler 405, and a six idler 406.

Referring to FIG.13, the driver's cab 102 connects to the first fixed end of the first chain 301; the first fixed end of the first chain 301 connects to the first chian302; the first chain 302 connects to the first sprocket 303 through the first idler 401 and connects to the second fixed end of the first chain 305 through the second idler 402, the fourth idler 404, the fifth idler 405 and the sixth idler 406; and the second fixed end of the first chain 305 connects to the driver's cab 102; wherein the first idler 401 connects to the sub-frame 105; the second idler 402 connects to the sub-frame 105; the third idler 403 connects to the cargo container 104;the fourth idler 404 connects to the cargo container 104; the fifth idler 405 connects to the cargo container 104; wherein the chain 302 is meshing with the first sprocket 303; the first sprocket 303 connects to the clutch, the clutch connects to the electric motor; and the electric motor connects to the sub-frame 105.

Referring to FIG. 13, the first fixed end of the first chain 301 is before the third idler 403; the third idler 403 is before the first idler 401; the first idler 401 is before the first sprocket 303; the first sprocket 303 is before the second idler 402; the second idler 402 is before the fourth idler 404; the fourth idler 404 is after the fifth idler 405; the fifth idler 405 is below the sixth idler 406; the sixth idler 406 is above the second fixed end of the first chain 305.

Referring to FIG. 13 and FIG.14, when the truck is changed from driving mode to transition mode, the clutch connects to the electric motor and the first sprocket 303; the electric motor drives the first sprocket 303; and the sub-frame 105 is moved from the first guiding device 203 to the second guiding device 204.

Referring to FIG.14, the first fixed end of the first chain 301 is before the first idler 401; the first idler 401 is before the first sprocket 303; the first sprocket 303 is before the second idler 402; the second idler 402 is before the third idler 403; the third idler 403 is before the fourth idler 404; the fourth idler 404 is after the fifth idler 405; the fifth idler 405 is below the sixth idler 406; the sixth idler 406 is above the second fixed end of the first chain 305.

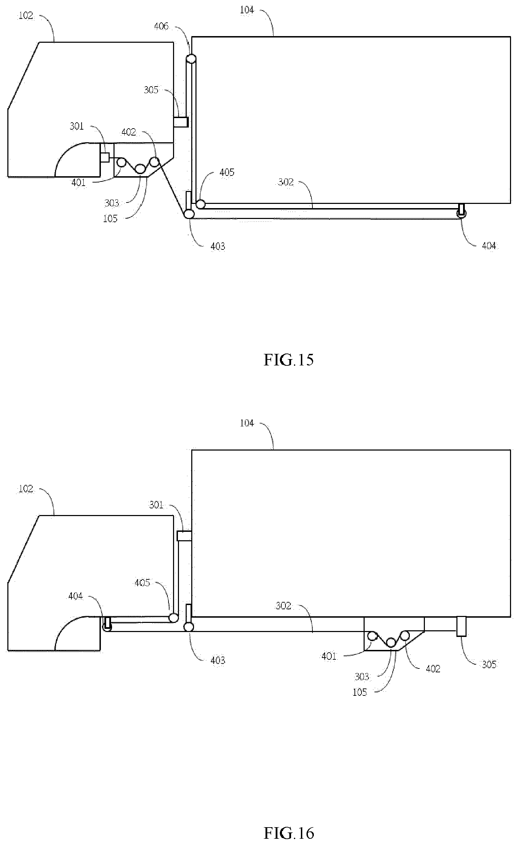

Referring to FIG.14 and FIG.15, when the truck is changed from the transition mode to loading mode, the third idler 403 connects to the first chain 302.

Referring to FIG.15, the first fixed end of the first chain 301 is before the first idler 401; the first idler 401 is before the first sprocket 303; the first sprocket 303 is before the second idler 402; the second idler 402 is before the third idler 403; the third idler 403 is before the fourth idler 404; the fourth idler 404 is after the fifth idler 405; the fifth idler 405 is below the sixth idler 406; the sixth idler 406 is above the second fixed end of the first chain 305.

Referring to FIG.15 and FIG.14, when the truck is changed from the loading mode to transition mode, the third idler 403 disconnects to the first chain 302.

Referring to FIG.14, the first fixed end of the first chain 301 is before the first idler 401; the first idler 401 is before the first sprocket 303; the first sprocket 303 is before the second idler 402; the second idler 402 is before the third idler 403; the third idler 403 is before the fourth idler 404; the fourth idler 404 is after the fifth idler 405; the fifth idler 405 is below the sixth idler 406; the sixth idler 406 is above the second fixed end of the first chain 305.

Referring to FIG.14 and FIG. 13, when the truck is changed from transition mode to driving mode, the electric motor drives the first sprocket; the sub-frame 105 is moved from the second guiding device 204 to the first guiding device 203; and the clutch disconnects to the electric motor and the first sprocket 303.

Referring to FIG. 13, the first fixed end of the first chain 301 is before the third idler 403; the third idler 403 is before the first idler 401; the first idler 401 is before the first sprocket 303; the first sprocket 303 is before the second idler 402; the second idler 402 is before the fourth idler 404; the fourth idler 404 is after the fifth idler 405; the fifth idler 405 is below the sixth idler 406; the sixth idler 406 is above the second fixed end of the first chain 305.

Referring to FIG.16, the rear axle movement to the fifth embodiment of the present invention includes an electric motor, a clutch, a first fixed end of the first chain 301, a first chain 302, a first sprocket 303, a second fixed end of the first chain 305, a first idler 401, a second idler 402, a third idler 403, a fourth idler 404, and a fifth idler 405.

Referring to FIG.16, the cargo container 104 connects to the first fixed end of the first chain 301; the first fixed end of the first chain 301 connects to the first chian302; the first chain 302 connects to the first sprocket 303 through the fifth idler 405, the fourth idler 404, and the first idler 401 and connects to the second fixed end of the first chain 305 through the second idler 402; and the second fixed end of the first chain 305 connects to the cargo container 104; wherein the first idler 401 connects to the sub-frame 105; the second idler 402 connects to the sub-frame 105; the third idler 403 connects to the cargo container 104; the fourth idler 404 connects to the driver's cab 102; the fifth idler 405 connects to the driver's cab 102; wherein the first chain 302 is meshing with the first sprocket 303; the first sprocket 303 connects to the clutch, the clutch connects to the electric motor; and the electric motor connects to the sub-frame 105.

Referring to FIG.16, the first fixed end of the first chain 301 is above the fifth idler 405; the fifth idler 405 is after the fourth idler 404; the fourth idler 404 is before the third idler 403; the third idler 403 is before the first idler 401; the first idler 401 is before the first sprocket 303; the first sprocket 303 is before the second idler 402; the second idler 402 is before the second fixed end of the first chain 305.

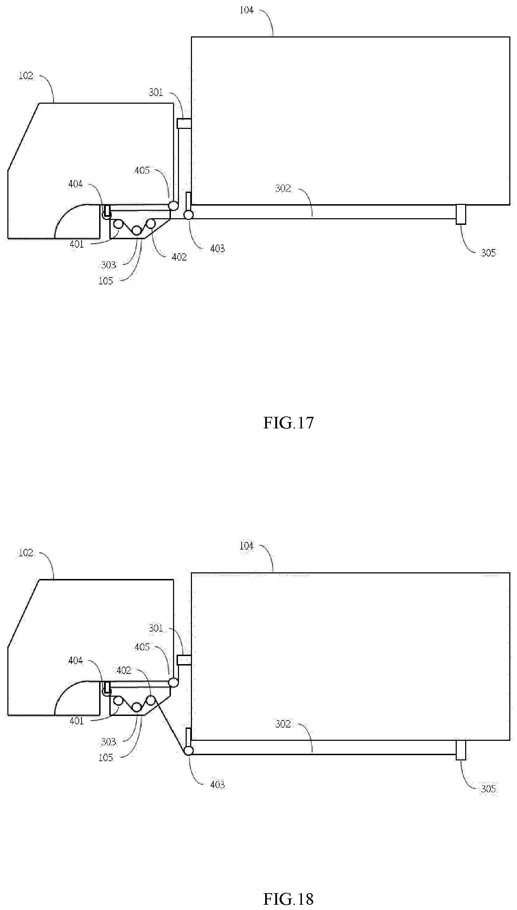

Referring to FIG.16 and FIG.17, when the truck is changed from driving mode to transition mode, the clutch connects to the electric motor and the first sprocket 303; the electric motor drives the first sprocket 303; and the sub-frame 105 is moved from the first guiding device 203 to the second guiding device 204.

Referring to FIG.17, the first fixed end of the first chain 301 is above the fifth idler 405; the fifth idler 405 is after the fourth idler 404; the fourth idler 404 is before the first idler 401; the first idler 401 is before the first sprocket 303; the first sprocket 303 is before the second idler 402; the second idler 402 is before the third idler 403; the third idler 403 is before the second fixed end of the first chain 305.

Referring to FIG.17 and FIG.18, when the truck is changed from transition mode to loading mode, the third idler 403 connects to the first chain 302.

Referring to FIG.18, the first fixed end of the first chain 301 is above the fifth idler 405; the fifth idler 405 is after the fourth idler 404; the fourth idler 404 is before the first idler 401; the first idler 401 is before the first sprocket 303; the first sprocket 303 is before the second idler 402; the second idler 402 is before the third idler 403; the third idler 403 is before the second fixed end of the first chain 305.

Referring to FIG.18 and FIG.17, when the truck is changed from loading mode to transition mode, the third idler 403 disconnects to the first chain 302.

Referring to FIG.17, the first fixed end of the first chain 301 is above the fifth idler 405; the fifth idler 405 is after the fourth idler 404; the fourth idler 404 is before the first idler 401; the first idler 401 is before the first sprocket 303; the first sprocket 303 is before the second idler 402; the second idler 402 is before the third idler 403; the third idler 403 is before the second fixed end of the first chain 305.

Referring to FIG.17 and FIG.16, when the truck is changed from transition mode to driving mode, the electric motor drives the first sprocket 303; the sub-frame 105 is moved from the second guiding device 204 to the first guiding device 203; and the clutch disconnects to the electric motor and the first sprocket 303.

Referring to FIG.16, the first fixed end of the first chain 301 is above the fifth idler 405; the fifth idler 405 is after the fourth idler 404; the fourth idler 404 is before the third idler 403; the third idler 403 is before the first idler 401; the first idler 401 is before the first sprocket 303; the first sprocket 303 is before the second idler 402; the second idler 402 is before the second fixed end of the first chain 305.

The rear axle 103 to the first embodiment to the fifth embodiment can be independent axle or dependent axle.

The cargo container 104 to the first embodiment to the fifth embodiment can be hard-top container or platform.

Suspension part such as spring and shock absorber can be further provided between the sub-frame 105 and the rear axle 103 to the first embodiment to the fifth embodiment.

Transmission part such as transmission axle and differential can be further provided between the sub-frame 105 and the rear axle 103 to the first embodiment to the fifth embodiment.

The first chain 302 to the first embodiment to the fifth embodiment can further connect to the third idler 403 when the truck is changed from loading mode to transition mode.

The electric motor can drive the rear axle to the first embodiment to the fifth embodiment.

The output shaft of the electric motor can connects to the first sprocket 303 to the first embodiment to the fifth embodiment.

The second height can be ground to the first embodiment to the fifth embodiment.

The first movable end of the first chain 304 can be linear actuator to the first embodiment to the third embodiment.

The length change of the first chain between the sixth idler 406 and the second fixed end of the first chain 305 is equal to the length change of the first chain between the second idler 402 and the third idler 403 to the fourth embodiment and the fifth embodiment.

The length change of the first chain between the sixth idler 406 and the second fixed end of the first chain 305 is more than or equal to the vertical distance between the first height and the second height to the fourth embodiment and the fifth embodiment.

The vertical distance between the sixth idler 406 and the second fixed end of the first chain 305 is more than or equal to the vertical distance between the first height and the second height to the fourth embodiment and the fifth embodiment.

## Claims

1. A rear axle movement device for a truck with a lowerable bed, comprising:
a front axle, a driver's cab, a rear axle, a cargo container, a sub-frame, a first lifting device, a second lifting device, a first guiding device, a second guiding device, and an electric motor,
wherein said front axle connects to said driver's cab,
wherein said driver's cab connects said second lifting device and said second guiding device,
wherein said second lifting device connects to said cargo container,
wherein said cargo container connects to said first lifting device and said first guiding device,
wherein in driving mode, said first guiding device connects to said sub-frame and said sub-frame connects to said rear axle,
wherein in loading mode, said second guiding device connects to said sub-frame and said sub-frame connects to said rear axle,
wherein said rear axle movement device comprises a first chain, a first fixed end of the first chain, a first sprocket, and a first movable end of the first chain,
wherein said first fixed end of the first chain connects to said first chain,
wherein said first chain connects to said first movable end of the first chain and said first sprocket,
wherein said first sprocket connects to said electric motor,
wherein said electric motor connects to said sub-frame.

2. The rear axle movement device as claimed in claim 1,
wherein said first fixed end of the first chain connects to said driver's cab,
wherein said first movable end of the first chain connects to said driver's cab.

3. The rear axle movement device as claimed in claim 1,
wherein said first fixed end of the first chain connects to said driver's cab,
wherein said first movable end of the first chain connects to said cargo container.

4. The rear axle movement device as claimed in claim 1,
wherein said first fixed end of the first chain connects to said cargo container, and
wherein said first movable end of the first chain connects to said cargo container.

5. The rear axle movement device as claimed in claim 2, 3 or 4,
wherein said first movable end of the first chain is a linear actuator.

6. The rear axle movement device as claimed in claim 1, further comprising:
a clutch,
wherein said clutch connects to said electric motor and said first sprocket.

7. The rear axle movement device as claimed in claim 1, further comprising:
a first idler,
wherein said first chain connects to said first fixed end of the first chain and said first sprocket through said first idler.

8. A rear axle movement device for a truck with lowerable bed, comprising:
a front axle, a driver's cab, a rear axle, a cargo container, a sub-frame, a first lifting device, a second lifting device, a first guiding device, a second guiding device, and an electric motor,
wherein said front axle connects to said driver's cab,
wherein said driver's cab connects said second lifting device and said second guiding device,
wherein said second lifting device connects to said cargo container,
wherein said cargo container connects to said first lifting device and said first guiding device,
wherein in driving mode, said first guiding device connects to said sub-frame and said sub-frame connects to said rear axle,
wherein in loading mode, said second guiding device connects to said sub-frame and said sub-frame connects to said rear axle,
wherein said rear axle movement device comprises a first chain, a first fixed end of the first chain, a first sprocket, and a second fixed end of the first chain,
wherein said first fixed end of the first chain connects to said first chain,
wherein said first chain connects to said second fixed end of the first chain and said first sprocket,
wherein said first sprocket connects to said electric motor,
wherein said electric motor connects to said sub-frame.

9. The rear axle movement device as claimed in claim 8,
wherein said first fixed end of the first chain connects to said driver's cab,
wherein said second fixed end of the first chain connects to said driver's cab.

10. The rear axle movement device as claimed in claim 8,
wherein said first fixed end of the first chain connects to said cargo container, and
wherein said second fixed end of the first chain connects to said cargo container.

11. The rear axle movement device as claimed in claim 9 or 10,
wherein said second fixed end of the first chain is a linear actuator.

12. The rear axle movement device as claimed in claim 8, further comprising:
a clutch,
wherein said clutch connects to said electric motor and said first sprocket.

13. The rear axle movement device as claimed in claim 8, further comprising:
a first idler,
wherein said first chain connects to said first fixed end of the first chain and said first sprocket through said first idler.

14. The rear axle movement device as claimed in claim 1 or 8, further comprising:
a first idler,
wherein said first chain connects to said first sprocket and said first movable end of the first chain through said first idler.

15. The rear axle movement device as claimed in claim 1 or 8, further comprising:
a first idler,
wherein said first idler connects to said sub-frame.
